# EUROPÄISCHE PATENTANMELDUNG

(11) **EP 1 544 610 A1**
(43) Veröffentlichungstag der Anmeldung: **22.06.2005**
(21) Anmeldenummer: 03029427.6
(22) Anmeldetag: 19.12.2003
(51) Int. Cl.: G01N 29/10

(54) **Verfahren zum Prüfen von keramischen Hitzeschildelementen auf Risse und Prüfkopfanordnung zum Durchführen des Verfahrens**

(71) Anmelder: SIEMENS AKTIENGESELLSCHAFT, 80333 München (DE)
(72) Erfinder: Blunck, Joachim, 47661 Issum (DE); Kaczmarek, Rafael, 47441 Moers (DE); Reiling, Manfred, 45475 Mülheim (DE)

(57) **Zusammenfassung**

Im erfindungsgemäßen Verfahren zum Prüfen von keramischen Hitzeschildelementen (5) erfolgt die Detektion eines Risses (13) anhand der Abschwächung der Intensität eines in das keramische Hitzeschildelement (5) ausgesandten Ultraschallbündels (9). Das zu prüfende Hitzeschildelement (5) umfasst eine erste Seite (7) und eine zweite Seite (11), welche der ersten Seite (7) gegenüberliegt. Das Aussenden des Ultraschallbündels (9) erfolgt dabei von der ersten Seite (7) aus in Richtung auf die zweite Seite (11), wo das Ultraschallbündel (9) reflektiert wird. Mit Hilfe der Ultraschallmessung können Risse in den Hitzeschildelementen erkannt werden.

## Beschreibung

Die vorliegende Erfindung betrifft ein Verfahren zum Prüfen von keramischen Hitzeschildelementen sowie eine Prüfkopfanordnung zum Verwenden beim Prüfen von keramischen Hitzeschildelementen.

In Brennkammern oder Flammrohren, die etwa Teil eines Brennofens, eines Heißgaskanals oder einer Gasturbine sein können und in denen ein heißes Medium erzeugt oder geführt wird, kommen Hitzeschilde zum Einsatz. Zum Beispiel ist eine thermisch hoch belastete Brennkammer einer Gasturbine zum Schutz vor zu hoher thermischer Beanspruchung in der Regel mit einem Hitzeschild ausgekleidet sein. Der Hitzeschild umfasst typischerweise eine Anzahl flächendeckend angeordneter keramischer Hitzeschildelemente (die im Folgenden lediglich als Hitzeschildelemente bezeichnet werden), welche die Wandung der Brennkammer gegen das heiße Medium, etwa ein heißes Verbrennungsgas, abschirmen und so einer übermäßigen thermischen Belastung der Brennkammerwand entgegenwirken.

Nach einer gewissen Betriebsdauer zeigen derartige Hitzeschildelemente Wärmespannungsrisse, die selbst limitierend sind und für den Dauerbetrieb keine Einschränkung darstellen. Überschreiten die Risse jedoch ein gewisses Kriterium, wird das betreffende Hitzeschildelement ausgetauscht. Das Kriterium wird dabei im Rahmen von geplanten Stillständen der Gasturbine festgestellt und wird in der Regel durch visuelle Begutachtung durch speziell geschultes Personal ermittelt. Da eine visuelle Begutachtung aufgrund der Oberflächenstruktur der vorliegenden Materialien eine gewisse Streubreite in den Begutachtungsergebnissen aufweist, kann es bei den Inspektionen zu unnötig hohen Austauschraten kommen.

Bisher ist das zerstörungsfreie Prüfen von keramischen Hitzeschildelementen sehr problematisch. Es existiert daher bisher kein etabliertes Verfahren für das zerstörungsfreie Prüfen für die in Hitzeschildelementen verwendeten Keramiken. Standartprüftechniken sind in ihrer Aussage unspezifisch bzw. führen nicht zum Erfolg, weswegen die Hitzeschildelemente noch immer visuell begutachtet werden.

Es besteht daher ein Bedarf an einem Verfahren zum präzisen und reproduzierbaren Ermitteln von Rissdaten anhand einer zerstörungsfreien Prüfung keramischer Hitzeschildelemente sowie an einer Vorrichtung zum Durchführen des Verfahrens. Aufgabe der vorliegenden Erfindung ist es, ein derartiges Verfahren sowie eine Prüfkopfanordnung zum Durchführen des Verfahrens zur Verfügung zu stellen.

Zur Lösung der genannten Aufgabe stellt die vorliegende Erfindung ein Verfahren zum Prüfen von keramischen Hitzeschildelementen nach Anspruch 1 sowie eine Prüfkopfanordnung nach Anspruch 7 zur Verfügung. Die abhängigen Ansprüche enthalten vorteilhafte Weiterbildungen der Erfindung.

Im erfindungsgemäßen Verfahren zum Prüfen von keramischen Hitzeschildelementen erfolgt die Detektion eines Risses anhand der Abschwächung der Intensität eines in das keramische Hitzeschildelement ausgesandten Ultraschallbündels. Das zu prüfende Hitzeschildelement umfasst eine erste Seite und eine zweite Seite, welche der ersten Seite gegenüberliegt. Das Aussenden des Ultraschallbündels erfolgt dabei von der ersten Seite aus in Richtung auf die zweite Seite, wo das Ultraschallbündel reflektiert wird. Mit Hilfe der Ultraschallmessung können Risse in den Hitzeschildelementen erkannt werden.

Das erfindungsgemäße Verfahren ermöglicht eine eindeutige und reproduzierbare Aussage im Hinblick auf das Austauschkriterium für die Hitzeschildelemente. Als Austauschkriterium kann dabei beispielsweise die Anzahl der Risse, die Länge der Risse, die Tiefe der Risse oder eine Kombination dieser Daten oder eines Teils dieser Daten dienen. Die gewonnenen Rissdaten über die Abschwächung des Ultraschallbündels können beispielsweise mit Erfahrungsdaten verglichen werden, um die Rissdaten zu erhalten. Das erfindungsgemäße Verfahren ermöglicht es aber nicht nur, eine reproduzierbare Aussage der Anzahl der Risse im Hinblick auf das Austauschkriterium zu ermitteln, sondern auch eine Aussage über die Tiefe der ermittelten Risse zu treffen. Letzteres war bisher nicht möglich. Zudem ermöglicht das erfindungsgemäße Verfahren das Prüfen von Hitzeschildelementen, die nur einseitig zugänglich sind, wie dies beispielsweise im eingebauten Zustand der Fall ist.

Das Aussenden des Ultraschallbündels in das keramische Hitzeschildelement erfolgt vorzugsweise senkrecht zur Oberfläche der ersten Seite des Hitzeschildelementes. Als Ultraschallbündel für das Durchführen des Verfahrens eignen sich insbesondere niederfrequente Ultraschallbündel.
In einer Ausgestaltung des Verfahrens kommen die folgenden Schritte zur Anwendung:
- Aussenden eines Ultraschallbündels mit einer bestimmten Intensität von einer bestimmten Stelle der ersten Seite aus in das keramische Hitzeschildelement in Richtung auf die zweite Seite.
- Messen der Intensität des von der zweiten Seite des keramischen Hitzeschildelementes reflektierten Ultraschallbündels an einer der bestimmten Stelle benachbarten Stelle der ersten Seite, vorzugsweise einer nahe benachbarten Stelle.
- Vergleichen der gemessenen Intensität des reflektierten Ultraschallbündels mit mindestens einer Vergleichsintensität, wobei die Vergleichsintensität derart gewählt ist, dass eine bestimmte Abweichung der Intensität des reflektierten Ultraschallbündels von der Vergleichsintensität einen Riss anzeigt.

Als Vergleichsintensität kann in der beschriebenen Ausgestaltung entweder eine Intensitätsschwelle oder ein Vergleichsspektrum dienen. Die Intensitätsschwelle ermöglicht dabei das rasche und unkomplizierte Einordnen der gemessenen Intensität. Wenn bspw. die Intensitätsschwelle auf einen Wert eingestellt wird, der zwischen der Intensität des rissfreien Materials und des gerissenen Materials liegt, so zeigt das Unterschreiten der Intensitätsschwelle durch die gemessene Intensität des reflektierten Ultraschallbündels einen Riss an. Demgegenüber ist der Vergleich mit einem Vergleichsspektrum etwas aufwendiger, jedoch ermöglicht er, komplexere Kriterien zum Einordnen der gemessenen Intensität im Hinblick auf das gewählte Austauschkriterium zur Anwendung zu bringen. So kann beispielsweise neben der mittleren Intensität des Spektrums auch die Form des Spektrums für das Vergleichen der gemessenen Intensität mit dem Vergleichsspektrum herangezogen werden. Die Intensitätsschwellen oder Vergleichsspektren können beispielsweise empirisch ermittelt werden.

Insbesondere kann mit dem erfindungsgemäßen Verfahren die Risstiefe anhand des Grades der Abschwächung der Intensität des reflektierten Ultraschallbündels ermittelt werden. Dabei können beispielsweise mehrere Vergleichsintensitäten, d.h. mehrer Intensitätsschwellen oder Vergleichsspektren, die jeweils unterschiedlich tiefe Risse repräsentieren, zum Vergleich mit der Intensität des reflektierten Ultraschallbündels vorhanden sein. Die Risstiefe lässt sich dann beispielsweise aus derjenigen Intensitätsschwelle ermitteln, der die Intensität des reflektierten Ultraschallbündels am nächsten kommt.

Im erfindungsgemäßen Verfahren erfolgt vorzugsweise ein Abtasten des Hitzeschildelementes mittels des Ultraschallbündels. Dieses Abtasten kann beispielsweise erfolgen, indem das Aussenden des Ultraschallbündels sowie das Messen der Intensität des von der zweiten Seite des keramischen Hitzeschildelementes reflektierten Ultraschallbündels an einer Mehrzahl von Prüforten des Hitzeschildelementes erfolgt. Die Prüforte können dabei insbesondere eine rasterartige Verteilung über dem Hitzeschildelement aufweisen.

Erfindungsgemäß wird auch eine Prüfkopfanordnung zur Verfügung gestellt, die sich zum Durchführen des erfindungsgemäßen Verfahrens eignet. Sie umfasst einen ersten Ultraschallprüfkopf, der als Ultraschallsender dient, und einen zweiten Ultraschallprüfkopf der als Ultraschallempfänger dient. Die beiden Prüfköpfe sind durch ein Verbindungselement in einem bestimmten Abstand zueinander fixiert und weisen eine Andrückvorrichtung auf, die derart ausgestaltet ist, dass sich die Ultraschallprüfköpfe mit einer reproduzierbaren Druckkraft an ein keramisches Hitzeschildelement andrücken lassen. Als Andruckvorrichtung kann einem Prüfkopf beispielsweise eine unter Vorspannung stehende Druckfeder zugeordnet sein, gegen deren Federkraft der Ultraschallprüfkopf gegen ein keramisches Hitzeschildelement anzudrücken ist.

In der erfindungsgemäßen Prüfkopfanordnung stellen der fixe Abstand zwischen den Ultraschallprüfköpfen und die reproduzierbare Druckkraft, mit der diese an ein keramisches Hitzeschildelement anzudrücken sind, die Reproduzierbarkeit der Messergebnisse sicher. Ein falsches Ergebnis oder eine falsche Interpretation der Intensitätsabschwächung aufgrund nicht reproduzierbaren Anhaltens der Ultraschallprüfköpfe an die zu prüfenden Hitzeschildelemente kann dadurch vermieden werden.

Vorzugsweise ist das Verbindungselement, welches die beiden Ultraschallprüfköpfe miteinander verbindet, derart ausgestaltet, dass sich ein bestimmter Abstand zwischen den Prüfköpfen einstellen lässt. Die Einstellbarkeit des Abstandes ermöglicht das Anpassen der Ultraschallprüfköpfe an das zu prüfende Material, die Oberflächensituation des zu prüfenden Materials, etc. Außerdem ermöglicht das Einstellen des Abstandes, den Prüfkopfabstand für die zu untersuchenden Hitzeschildelemente empirisch zu optimieren.

In einer konstruktiv einfachen Ausgestaltung der Prüfkopfanordnung ist das Verbindungselement als ein die beiden Ultraschallprüfköpfe mittelbar oder unmittelbar verbindender Steg ausgebildet. Als die Prüfköpfe mittelbar miteinander verbindender Steg soll dabei ein Steg anzusehen sein, der nicht direkt mit den Prüfköpfen verbunden ist, sondern mit Prüfkopfgehäusen, in denen jeweils ein Ultraschallprüfkopf angeordnet ist. Insbesondere kann der Steg mindestens ein Langloch aufweisen, wobei die Ultraschallprüfköpfe oder deren Gehäuse dann jeweils mittels mindestens eines Befestigungselementes, welches sich durch das Langloch erstreckt, bspw. einer Schraube, befestigt sind. Der Steg kann ein einziges Langloch aufweisen, durch das sich die Befestigungselemente für beide Ultraschallprüfköpfe erstrecken. Alternativ ist es auch möglich, den Steg mit zwei Langlöchern auszustatten, wobei sich durch das eine Langloch das mindestens eine Befestigungselement für den einen Ultraschallprüfkopf und durch das andere Langloch das mindestens eine Befestigungselement für den anderen Ultraschallprüfkopf erstreckt. Die letztere Ausgestaltung ermöglicht eine höhere Stabilität des Steges bei gleichen Abmessungen wie mit einem einzigen Langloch oder die gleiche Stabilität des Steges bei geringeren Abmessungen als mit einem einzigen Langloch.

In einer vorteilhaften Ausgestaltung der vorliegenden Prüfkopfanordnung sind die Ultraschallprüfköpfe derart beweglich in einem Gehäuse angeordnet, dass sie teilweise aus dem Gehäuse herausragen und zwischen einer maximal herausragenden Stellung und einer minimal herausragenden Stellung verschoben werden können. Mittels einer Vorspanneinrichtung, die zwischen einem Gehäuse und dem oder den darin angeordneten Ultraschallprüfköpfen wirkt, lassen sich die Ultraschallprüfköpfe derart vorspannen, dass sie sich im Ruhezustand in der maximal aus dem Gehäuse herausragenden Stellung befinden und gegen die Vorspannung in die minimal herausragende Stellung zu bringen sind. Als Vorspanneinrichtung kann die bereits erwähnte Druckfeder Verwendung finden, die zwischen einem Gehäuse und einem Ultraschallprüfkopf angeordnet ist. Dabei kann jeder Prüfkopf ein eigenes Gehäuse umfassen, wobei die beiden Gehäuse beispielsweise mittels eines Steges als Verbindungselement miteinander verbunden sind, oder die Ultraschallprüfköpfe können in einem bestimmten Abstand zueinander in einem gemeinsamen Gehäuse angeordnet sein. Wenn die Ultraschallprüfköpfe in einem gemeinsamen Gehäuse angeordnet sind, können sie auch von einer gemeinsamen Vorspanneinrichtung vorgespannt werden. Jedoch ist es auch beim Verwenden eines gemeinsamen Gehäuses möglich, die Ultraschallprüfköpfe durch getrennte Vorspanneinrichtungen vorzuspannen.

In der erfindungsgemäßen Prüfkopfanordnung sind die Ultraschallprüfköpfe vorzugsweise als Senkrechtprüfköpfe ausgestaltet.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Fig. 1 zeigt die Reflektion des Ultraschallbündels im erfindungsgemäßen Messverfahren, wenn kein Riss im untersuchten Hitzeschildelement vorliegt.

Fig. 2 zeigt die Reflektion des Ultraschallbündels im erfindungsgemäßen Messverfahren, wenn im untersuchten Hitzeschildelement ein Riss vorliegt, der sich durch einen Teil des Hitzeschildelementes erstreckt.

Fig. 3 zeigt die Reflektion des Ultraschallbündels im erfindungsgemäßen Verfahren, wenn sich ein Riss vollständig durch das Hitzeschildelement erstreckt.

Fig. 4 zeigt ein Ausführungsbeispiel für die erfindungsgemäße Prüfkopfanordnung in einer ersten Seitenansicht im Schnitt.

Fig. 5 zeigt das Ausführungsbeispiel für die erfindungsgemäße Prüfkopfanordnung in einer zweiten Seitenansicht.

Fig. 6 zeigt das Ausführungsbeispiel für die erfindungsgemäße Prüfkopfanordnung in einer Draufsicht.

Fig. 7 zeigt die erfindungsgemäße Prüfkopfanordnung in Ruhestellung.

Fig. 8 zeigt die erfindungsgemäße Prüfkopfanordnung in Messstellung.

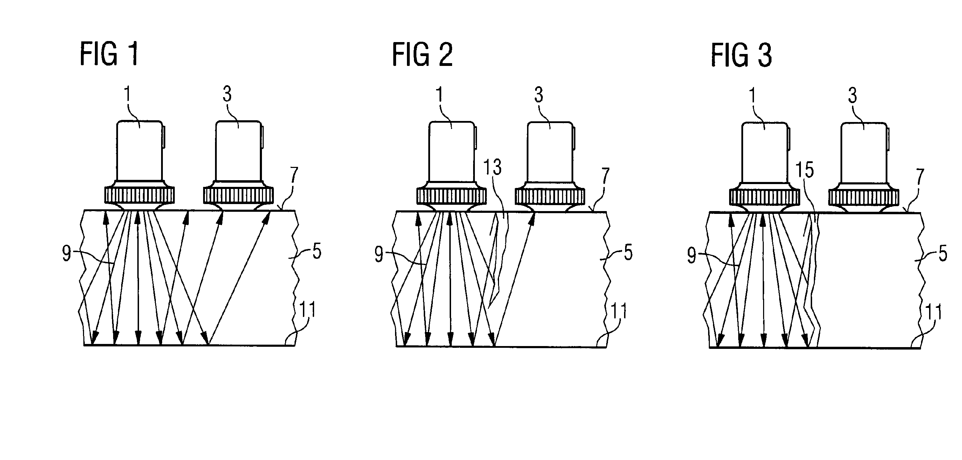

Das erfindungsgemäße Verfahren zum Prüfen von keramischen Hitzeschildelementen auf Risse wird nachfolgend mit Bezug auf die Figuren 1 bis 3 näher erläutert.

Das erfindungsgemäße Verfahren wird unter Verwendung von Senkrechtprüfköpfen, die nach der Durchschallungsmethode im Sender-Empfänger-Betrieb (SE-Betrieb) arbeiten, durchgeführt. Im SE-Betrieb finden zwei Ultraschallprüfköpfe Verwendung, wobei der eine Ultraschallprüfkopf als Sender und der andere als Empfänger dient. Unter dem Begriff "Senkrechtprüfköpfe" ist hierbei zu verstehen, dass der als Sender fungierende Ultraschallprüfkopf ein Ultraschallbündel senkrecht zur Oberfläche des zu prüfenden Hitzeschildelementes aussendet.

Figur 1 zeigt die Anordnung des als Ultraschallsender dienenden Ultraschallprüfkopfes 1, im Folgenden kurz Ultraschallsender genannt, sowie des als Ultraschallempfänger dienenden Ultraschallprüfkopfes 3, im Folgenden kurz Ultraschallempfänger genannt, relativ zueinander und relativ zum Hitzeschildelement 5. Um Risse zu detektieren, werden der Ultraschallempfänger 3 und der Ultraschallsender 1 vorzugsweise nahe benachbart nebeneinander an die Oberfläche 7 der einen Seite des Hitzeschildelementes 5 angehalten. Bei der Messung wird dabei die Durchlässigkeit des zwischen den beiden Ultraschallprüfköpfen 1, 3 befindlichen Keramikmaterials geprüft. Sind die beiden Ultraschallprüfköpfe 1, 3 über einem rissfreien Bereich positioniert, so dringt das vom Ultraschallsender 1 ausgesendete und durch Pfeile 9 dargestellte Ultraschallbündel ungestört durch das Material hindurch und wird an der Rückseite 11 des Hitzeschildelementes 5 reflektiert. Wenn, wie in Figur 1 dargestellt, kein Riss im Keramikmaterial vorhanden ist, so erreicht ein hoher Anteil des Ultraschallbündels 9 nach der Reflektion an der Rückseite 11 den Ultraschallempfänger 3, so dass dieser eine hohe Intensität detektiert.

Wenn das keramische Hitzeschildelement 5 wie in Figur 2 dargestellt einen Riss 13 aufweist, der sich im Bereich zwischen dem Ultraschallsender 1 und dem Ultraschallempfänger 3 teilweise durch das Hitzeschildelement 5 erstreckt, wo wird ein Teil des an der Rückseite 11 des Hitzeschildelementes 5 reflektierten Ultraschallbündels 9 daran gehindert, den Ultraschallempfänger 3 zu erreichen. Die Intensität des vom Ultraschallempfänger 3 detektierten Ultraschallbündels ist daher gegenüber dem in Figur 1 dargestellten Fall vermindert.

Im Falle eines sich durch das gesamte Hitzeschildelement 5 erstreckenden Risses 15 wird das vom Ultraschallsender 1 ausgesendete Ultraschallbündel 9 wie in Figur 3 dargestellt vollständig durch den Riss 15 reflektiert und so daran gehindert, den Ultraschallempfänger 3 zu erreichen, sodass die vom Ultraschallempfänger 3 detektierte Ultraschallintensität im Wesentlichen Null ist.

Zum Prüfen des Hitzeschildelementes auf Risse wird die gesamte Oberfläche 7 des Hitzeschildelementes 5 mittels des Ultraschallempfängers 1 und des Ultraschallsenders 3 abgetastet. Anhand der dabei aufgefundenen Risse erfolgt die Feststellung, ob das Hitzeschildelement 5 ausgetauscht werden muss.

Um ein falsches Ergebnis bei der beschriebenen Rissprüfung bzw. eine falsche Interpretation der vom Ultraschallempfänger 3 empfangenen Intensität zu vermeiden, haben der Ultraschallsender 1 und der Ultraschallempfänger 3 während der Untersuchung einen fixen Abstand zueinander. Außerdem werden sie mit einer reproduzierbaren Druckkraft beaufschlagt, welche es ermöglicht, die Ultraschallprüfköpfe 1, 3 immer mit derselben Kraft an das Hitzeschildelement 5 anzudrücken.

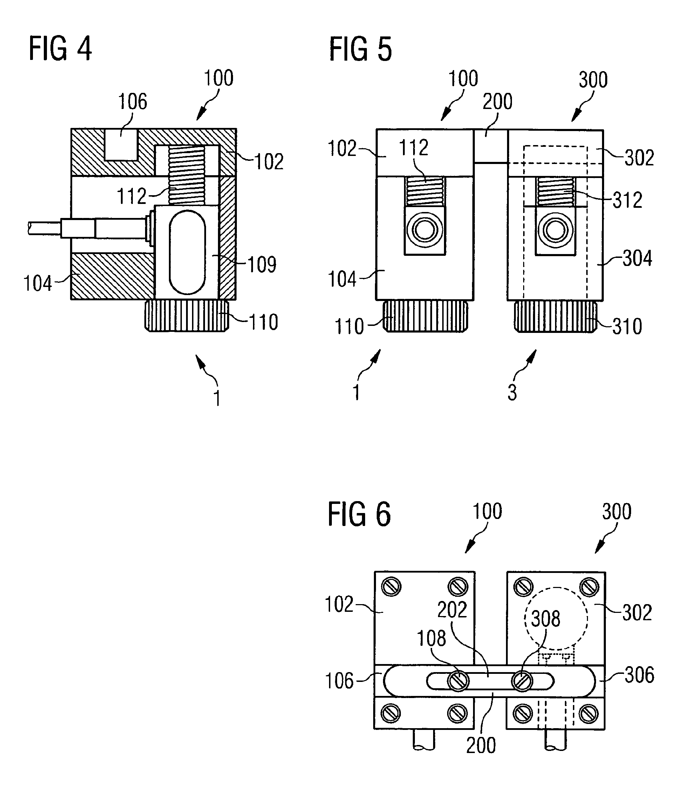

Eine Prüfkopfanordnung zum Durchführen des erfindungsgemäßen Verfahrens ist in den Figuren 4 bis 6 dargestellt. Figur 4 zeigt die erfindungsgemäße Prüfkopfanordnung in einer geschnittenen Seitenansicht. Figur 5 zeigt die erfindungsgemäße Prüfkopfanordnung in einer zur Seitenansicht aus Figur 4 senkrechten Seitenansicht und Figur 6 zeigt die erfindungsgemäße Prüfkopfanordnung in Draufsicht.

Die Prüfkopfanordnung umfasst zwei Prüfköpfe 1, 3, welche jeweils in einem Prüfkopfgehäuse 100, 300 angeordnet sind. Jedes der beiden Prüfkopfgehäuse 100, 300 ist zweigeteilt ausgebildet und umfasst ein Gehäuseoberteil 102 bzw. 302 sowie ein Gehäuseunterteil 104, bzw. 304. Die beiden Prüfkopfgehäuse 100, 300 sind über einen Führungssteg 200 miteinander verbunden. Der Führungssteg 200 ist in den beiden Gehäuseoberteilen 102, 302 jeweils in einer Nut 106, 306 angeordnet und weist ein Langloch 202 auf, durch welches sich Schrauben 108, 308 erstrecken, mit denen die Gehäuseoberteile 102, 302 mit dem Führungssteg 200 lösbar verbunden sind. Mittels des Langloches 202 und der Schrauben 108, 308 lässt sich der Abstand der Prüfkopfgehäuse 100, 300 und damit der Ultraschallprüfköpfe 1, 3 zueinander variieren.

Die Ultraschallprüfköpfe 1, 3 weisen jeweils einen zylindrischen Grundkörper 109 und eine im Wesentlichen zylindrische Schutzkappe 110, 310 auf, wobei der Radius der Schutzkappe 110, 310 etwas größer als der Radius des Grundkörpers 109 ist. Im Gehäuseunterteil 104, 304 der Prüfkopfgehäuse 100, 300 ist jeweils eine runde Öffnung vorhanden, deren lichter Durchmesser an den Durchmesser des Grundkörpers des jeweiligen Prüfkopfes derart angepasst ist, dass der Grundkörper sich durch die Öffnung hindurch erstrecken kann und dabei von der Wand der Öffnung geführt wird.

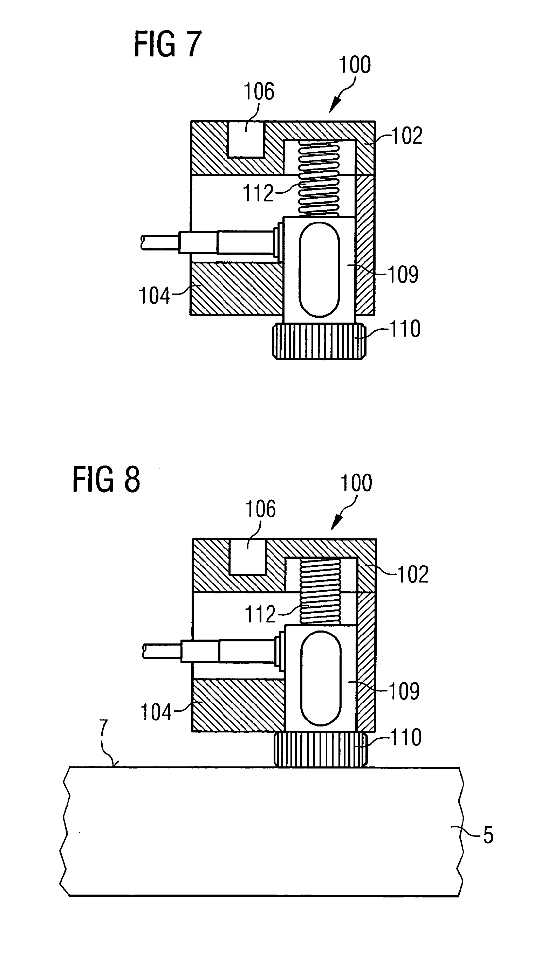

Der Prüfkopf 1, 3 ist derart im Prüfkopfgehäuse 100, 300 angeordnet, dass er sich teilweise durch die Öffnung des Gehäuseunterteils 104, 304 hindurch erstreckt. Die Schutzkappe 110, 310 ist dabei außerhalb des Prüfkopfgehäuses angeordnet. Zwischen den Grundkörper 109 und dem Gehäuseoberteil 102, 302 ist eine unter Vorspannung stehende Druckfeder 112, 312 angeordnet, welche den im Gehäuse 100, 300 angeordneten Ultraschallprüfkopf 1, 3 im Ruhezustand mit einer ihn in eine maximal ausgefahrene Stellung drückenden Vorspannkraft beaufschlagt. In der maximal ausgefahrenen Stellung sind die Unterkante des Gehäuseunterteils 104, 304 und die Oberkante der Schutzkappe 110, 310 circa 3 mm voneinander entfernt (Figur 7).

Um während des Prüfens eines Hitzeschildelementes 5 eine gleich bleibende Druckkraft auszuüben, werden die Prüfköpfe bis zum Anschlag der Oberkante der Schutzkappe 110, 310 an die Unterkante des Gehäuseunterteils 104, 304 gegen die Vorspannkraft der Druckfeder 112, 312 auf die Oberfläche 7 des Hitzeschildelementes 5 gedrückt (Figur 8). In diesem Zustand wird dann die vom Ultraschallempfänger 3 empfangene Intensität abgelesen.

Beim Untersuchen des Hitzeschildelementes 5 kann aus der vom Ultraschallempfänger 3 empfangenen Ultraschallintensität auf das Vorhandensein von Rissen im Keramikmaterial geschlossen werden. Typischweise zeigt ein neuer Stein überhaupt keine Schwächung oder so gut wie keine Schwächung des Signals. Gebrauchte Hitzeschildelemente zeigen aufgrund von Veränderungen während des Gebrauchs typischerweise eine geringe Schwächung der empfangenen Ultraschallintensität. Risse im Keramikmaterial des Hitzeschildelementes 5, die sich teilweise durch das Material hindurch erstrecken, machen sich durch eine stärkere Schwächung der vom Ultraschallempfänger 3 empfangenen Ultraschallintensität bemerkbar. Bei Vorliegen eines sich durch das gesamte Keramikmaterial des Hitzeschildelementes 5 erstreckenden Risses wird vom Ultraschallempfänger 3 praktisch überhaupt keine Ultraschallintensität mehr detektiert. Zwischen den vom Ultraschallempfänger 3 detektierten Intensitäten eines gebrauchten aber ansonsten fehlerfreien Hitzeschildelementes und eines Hitzeschildelementes mit einem sich nicht durch das gesamte Keramikmaterial erstreckenden Risses, kann dabei beispielsweise außer anhand der Abschwächung des Signals auch anhand der Form des vom Ultraschallempfänger 3 aufgenommenen Ultraschallspektrums unterschieden werden. Auf diese Weise lassen sich auch Hitzeschildelemente mit kleinen Rissen von gebrauchten Hitzeschildelementen ohne Risse unterscheiden.

Zum Darstellen der empfangenen Intensität kann dem Ultraschallempfänger 3 eine Anzeigevorrichtung (nicht dargestellt) zugeordnet sein, auf der entweder ein Intensitätspegel oder ein Intensitätsspektrum der vom Ultraschallempfänger 3 empfangenen Ultraschallwellen dargestellt wird. Außerdem kann eine Vergleichsintensität oder ein Vergleichsspektrum zum Vergleichen mit der empfangenen Ultraschallintensität dargestellt sein. Ein derartiger Vergleich kann aber auch von einem geeigneten Computerprogramm ohne das Anzeigen der Vergleichsintensität bzw. des Vergleichsspektrums oder der gemessenen Intensität erfolgen.

Als Ultraschallköpfe 1, 3 der erfindungsgemäßen Prüfkopfanordnung eignen sich insbesondere Senkrechtprüfköpfe, d.h. Prüfköpfe, mit denen sich Ultraschallwellen senkrecht zur Oberfläche 7 des Hitzeschildelementes 5 in das keramische Material aussenden lassen. Besonders geeignet sind hierbei breitbandige Kompositprüfköpfe, da solche Prüfköpfe sowohl als Sender als auch als Empfänger der Ultraschallwellen dienen können. Die Ultraschallprüfköpfe 1, 3 werden vorzugsweise mittels einer Flüssigkeit oder einer Koppelpaste an die Oberfläche 7 des zu prüfenden Hitzeschildelementes 5 angekoppelt, damit die Ultraschallwellen gut vom Ultraschallprüfkopf 1 in das keramische Hitzeschildelement 5 bzw. vom keramischen Hitzeschildelement 5 in den Ultraschallprüfkopf 3 übertragen werden können.

## Patentansprüche

1. Verfahren zum Prüfen von keramischen Hitzeschildelementen (5) mit einer ersten Seite (7) und einer der ersten Seite gegenüber liegenden zweiten Seite (11) auf Risse (13, 15), bei dem eine Detektion eines Risses (13, 15) anhand einer Abschwächung der Intensität eines von der ersten Seite (7) aus in das keramische Hitzeschildelement (5) ausgesendeten und von der zweiten Seite (11) reflektierten Ultraschallbündels (9) erfolgt.

2. Verfahren nach Anspruch 1, bei dem das Aussenden des Ultraschallbündels (9) in das keramische Hitzeschildelement (5) senkrecht zur Oberfläche der ersten Seite (7) erfolgt

3. Verfahren nach Anspruch 1 oder 2, bei dem ein niederfrequentes Ultraschallbündel ausgesendet wird.

4. Verfahren nach einem der Ansprüche 1 bis 3, mit den Schritten:
- Aussenden eines Ultraschallbündels (9) mit einer bestimmten Intensität von einer bestimmten Stelle der ersten Seite (7) aus in das keramische Hitzeschildelement (5) in Richtung auf die zweite Seite (11),
- Messen der Intensität des von der zweiten Seite (11) des keramischen Hitzeschildelementes (5) reflektierten Ultraschallbündels (9) an einer der bestimmten Stelle benachbarten Stelle der ersten Seite (7), und
- Vergleichen der gemessenen Intensität des reflektierten Ultraschallbündels mit mindestens einer Vergleichsintensität, wobei die Vergleichsintensität derart gewählt ist, dass eine bestimmte Abweichung der Intensität des reflektierten Ultraschallbündels von der Vergleichsintensität einen Riss anzeigt.

5. Verfahren nach einem der Ansprüche 1 bis 4, bei dem ein Ermitteln der Risstiefe anhand des Grades der Abschwächung der Intensität des reflektierten Ultraschallbündels erfolgt.

6. Verfahren nach einem der Ansprüche 1 bis 6, bei dem ein Abtasten des Hitzeschildelementes mittels des Ultraschallbündels (9) erfolgt.

7. Prüfkopfanordnung zur Verwendung beim Prüfen von keramischen Hitzeschildelementen (5) mit
- einem ersten, als Ultraschallsender dienenden Ultraschallprüfkopf (1),
- einem zweiten, als Ultraschallempfänger dienenden Ultraschallprüfkopf (3),
- einem die beiden Ultraschallprüfköpfe (1, 3) in einem bestimmten Abstand zueinander fixierenden Verbindungselement (200) und
- einer Andrückvorrichtung (112, 312), die derart ausgestaltet ist, dass sich die Ultraschallprüfköpfe (1, 3) mit einer reproduzierbaren Druckkraft an ein keramisches Hitzeschildelement (5) andrücken lassen.

8. Prüfkopfanordnung nach Anspruch 7, bei der das Verbindungselement derart ausgestaltet ist, dass sich der bestimmte Abstand einstellen lässt.

9. Prüfkopfanordnung nach Anspruch 7 oder 8, bei der als Verbindungselement ein die beiden Ultraschallprüfköpfe (1, 3) mittelbar oder unmittelbar verbindender Steg (200) ausgebildet ist.

10. Prüfkopfanordnung nach Anspruch 8 und Anspruch 9, bei der der Steg (200) mindestens ein Langloch (202) aufweist und die Ultraschallprüfköpfe (1, 3) jeweils mittels mindestens eines Befestigungselementes (108, 308) mittelbar oder unmittelbar derart am Steg (200) befestigt sind, dass sich das jeweilige Befestigungselement (108, 308) durch das mindestens eine Langloch (202) erstreckt.

11. Prüfkopfanordnung nach einem der Ansprüche 7 bis 10, bei der die Ultraschallprüfkopfe (1, 3) derart beweglich in mindestens einem Gehäuse (100, 300) angeordnet sind, dass sie teilweise aus dem mindestens einen Gehäuse (100, 300) herausragen und zwischen einer maximal herausragenden Stellung und einer minimal herausragenden Stellung verschoben werden können, und bei dem zwischen dem mindestens einen Gehäuse (100, 300) und den Ultraschallprüfköpfen (1, 3) mindestens eine Vorspanneinrichtung (112, 312) wirkt, welche die Ultraschallprüfköpfe (1, 3) derart vorspannt, dass sie sich im Ruhezustand in der maximal aus dem Gehäuse (100, 300) herausragenden Stellung befinden und gegen die Vorspannung in die minimal herausragende Stellung zu bringen sind.

12. Prüfkopfanordnung nach einem der Ansprüche 7 bis 11, bei dem die Ultraschallprüfkopfe (1, 3) als Senkrechtprüfköpfe ausgestaltet sind.
